# EUROPÄISCHE PATENTSCHRIFT

(11) **EP 1 458 585 B1**
(45) Veröffentlichungstag und Bekanntmachung des Hinweises auf die Patenterteilung: **08.03.2006**
(21) Anmeldenummer: 02779176.3
(22) Anmeldetag: 25.10.2002
(51) Int. Cl.: B60K 31/00, B60W 30/14

(54) **VERFAHREN ZUR FAHRSTRECKENABHÄNGIGEN FAHRZEUGBEEINFLUSSUNG**
METHOD FOR INFLUENCING A VEHICLE ACCORDING TO A ROUTE
PROCEDE PERMETTANT D'INFLUENCER UN VEHICULE EN FONCTION DU PARCOURS

(30) Priorität: 14.12.2001 DE 10161532
(43) Veröffentlichungstag der Anmeldung: 22.09.2004
(73) Patentinhaber: ROBERT BOSCH GMBH, 70442 Stuttgart (DE)
(72) Erfinder: HEYSE, Joerg, 74354 Bietigheim (DE)
(86) Internationale Anmeldenummer: PCT/DE2002/004011
(87) Internationale Veröffentlichungsnummer: WO 2003/051662

(56) Entgegenhaltungen:
- DE-U- 29 820 659
- US-A- 5 521 823
- US-A- 6 161 072

## Beschreibung

### Stand der Technik

Die Erfindung betrifft ein Verfahren und eine Vorrichtung zur fahrstreckenabhängigen Fahrzeugbeeinflussung.

Die Ausstattung von Fahrzeugen mit Mitteln zur Erfassung der geographischen Position des Fahrzeugs .(z.B. GPS-Empfänger) nimmt zu. Hauptanwendungsgebiet ist die Verwendung der geographischen Ortsinformation in Verbindung mit Navigationssystemen. Eine individuelle Beeinflussung von Fahrzeugfunktionen auf der Basis einer solchen Ortsinformation ist in solchen Systemen nicht vorgesehen.

Das gattungsbildende US-Patent 6 161 072 beschreibt einen Fahrgeschwindigkeitsregler welcher es erlaubt, Sollgeschwindigkeiten abzuspeichern, die zu bestimmten Zeiten benutzt bzw. gefahren wurden. Diese Sollgeschwindigkeiten werden dann automatisch an vorgegebenen Orten zu gleichen oder ähnlichen Zeiten angewendet und die Geschwindigkeit des Fahrzeugs entsprechend begrenzt. Dabei ist auch vorgesehen, dass der Fahrer Eingaben vornehmen kann, welche die vorgesehenen Begrenzungen deaktivieren. Dabei wird eine neue Geschwindigkeit abgespeichert. Die wesentlichen Bedingungen, die zur Abspeicherung bzw. Anwendung einer abgespeicherten Geschwindigkeit herangezogen werden, sind Ort und Zeit.

Entsprechendes gilt im Bezug auf das US-Patent 5 521 823. Diese zeigt ebenfalls eine Beeinflussung der Fahrzeugsteuerung abhängig von Ort und Zeit. Im Vordergrund steht dabei eine Anpassung der Fahreigenschaften des Fahrzeugs. Es sind Lernprogramme vorgesehen, die abhängig von Ort und Zeit das Verhalten des Fahrers fernen und bei der Einstellung der Fahreigenschaften des Fahrzeugs berücksichtigen.

### Vorteile der Erfindung

Durch die erfindungsgemäße Vorgehensweise wird die Vorgabe, z.B. durch den Fahrer, eines definierten Fahrstreckenabschnitts ermöglicht, bei dessen Befahren eine gezielte Beeinflussung einer Fahrzeugfunktion, in diesem Falle eine Fahrgeschwindigkeitsbegrenzung, vorgenommen wird.

Besondere Vorteile ergeben sich bei der Anwendung dieser Vorgehensweise in Verbindung mit einem automatischen Fahrgeschwindigkeitsbegrenzer. Dadurch wird es dem Fahrer möglich, Fahrstrecken vorzugeben, an denen die Geschwindigkeit automatisch begrenzt wird. Somit kann der Fahrer Strecken, die er häufig befährt, und auf denen die Geschwindigkeit begrenzt ist, frei programmierbar vorgeben. Bei Eintritt in den festgelegten Streckenabschnitt erfolgt eine automatische Begrenzung der Fahrzeuggeschwindigkeit auf eine, ebenfalls vorgebbare, dem Streckenabschnitt zugeordnete Maximalgeschwindigkeit.

Besonders vorteilhaft ist, dass durch ein einfaches "Teachin-Verfahren" die Programmierung der Fahrstrecke, die Programmierung der Geschwindigkeitsbegrenzung, wie die der zugeordneten Grenzgeschwindigkeit, während der Fahrt vorgenommen werden kann. In besonders vorteilhafter Weise werden dabei vorhandene Bedienelemente des Fahrgeschwindigkeitsreglers oder - begrenzers verwendet.

In vorteilhafter Weise ist die automatische Geschwindigkeitsbegrenzung jederzeit deaktivierbar, bei aktiver Begrenzung beispielsweise, indem der Fahrer das Fahrpedal vollständig betätigt (Kick-Down-Schalter), oder generell durch einen Ein-/Aus-Schalter.

Eine besonders vorteilhafte Ergänzung ist, dass fest vorgegebene Geschwindigkeitsbegrenzungen an definierten Fahrstreckenabschnitten, wie beispielsweise in Städten, für bestimmte Regionen, etc. mittels eines regelmäßigen Updates bezogen, geladen und verändert werden können.

Es wird ferner die Fahrtrichtung des Fahrzeugs erfaßt, so dass die Fahrgeschwindigkeitsbegrenzung auf einer vom Fahrer ausgewählten Fahrtstrecke auch richtungsabhängig vorgegeben wird, so dass eine Geschwindigkeitsbegrenzung in dieser Fahrtrichtung vorgenommen wird, in der Gegenrichtung nicht. Es wird dadurch sichergestellt, dass eine möglicherweise einprogrammierte Geschwindigkeitsbegrenzung nicht vorgenommen wird, wenn sich das Fahrzeug beispielsweise auf einer Kreuzung quer zur einprogrammierten Fahrtrichtung bewegt.

In vorteilhafter Weise wird ferner beim Einprogrammieren der Geschwindigkeitsbegrenzung während der Fahrt die durchschnittlich übliche Reaktionszeit des Fahrers berücksichtigt. Dies bedeutet, dass die Ortskoordinate, ab welcher bei Wiederbefahren der Strecke die automatische Geschwindigkeitsbegrenzung einsetzt, die Ortskoordinate zum Zeitpunkt des Einprogrammierens minus der aus Reaktionszeit und Geschwindigkeit abgeleiteten Reaktionsstrecke ist.

In vorteilhafter Weise wird der vom Fahrer einprogrammierbare Streckenabschnitt zur Fahrzeugbeeinflussung nicht nur in Verbindung mit einem Fahrgeschwindigkeitsbegrenzer sondern auch ergänzend oder alternativ mit anderen Funktionen wie z.B. das Aktivieren von Fahrerassistenzsystemen wie z.B. einem adaptiven Fahrgeschwindigkeitsregler (ACC), etc., das Einschalten der Beleuchtung des Fahrzeugs, oder für das Einstellen von Fahrwerkseigenschaften (sportlich, komfortabel), oder für Ferndiagnose, Fernwartung und/oder Fahrzeugeingriff (z.B. Freigabe und Aktivieren von Datenverbindungen auf vorbestimmten Streckenabschnitten) belegt.

Weitere Vorteile ergeben sich aus der folgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert.

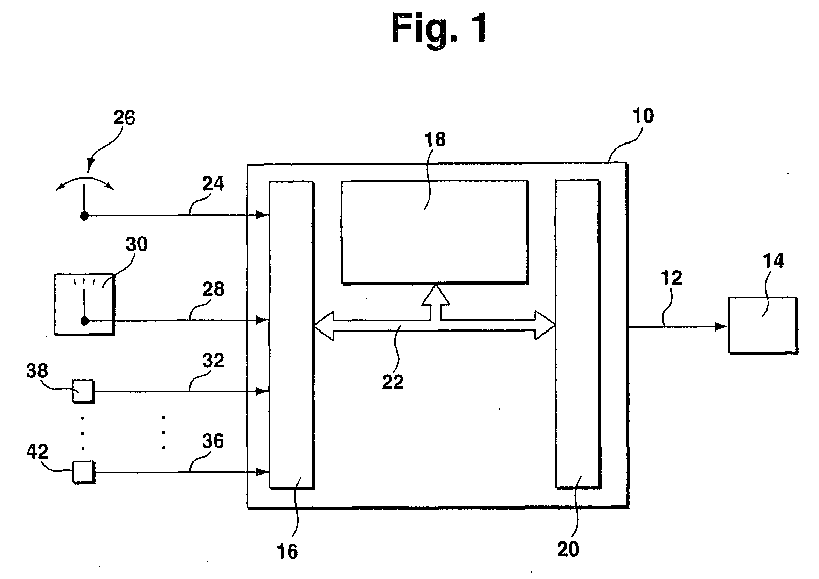

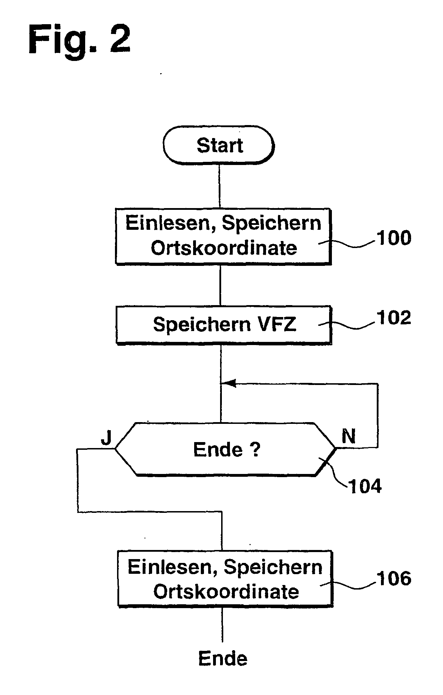

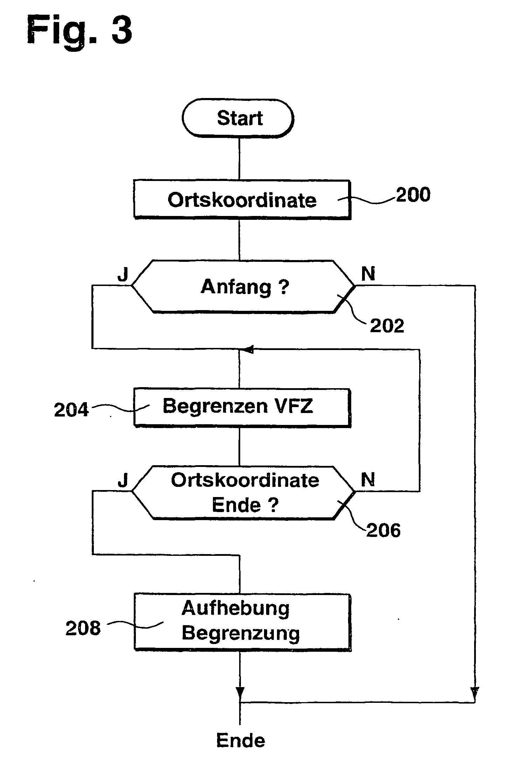

Figur 1 zeigt dabei eine Einrichtung zur Durchführung der nachfolgend dargestellten Vorgehensweise. Letzere ist an einem bevorzugten Ausführungsbeispiel im Rahmen der Ablaufdiagramme der Figuren 2 und 3 näher dargestellt.

### Beschreibung von Ausführungsbeispielen

Figur 1 zeigt eine elektronische Steuereinheit 10, die über wenigstens eine Ausgangsleitung 12 wenigstens eine das Fahrzeug beeinflussende Stelleinrichtung 14 betätigt. Die Steuereinheit 10 umfaßt dabei im Wesentlichen eine Eingangsschaltung 16, wenigstens einen Mikrocomputer 18 sowie eine Ausgangsschaltung 20. Eingangsschaltung 16, Ausgangschaltung 20 und Mikrocomputer 18 sind über ein Bussystem miteinander zur Kommunikation verbunden. Der Eingangsschaltung 16 werden je nach Ausgestaltung der Steuereinrichtung verschiedene Eingangsgrößen zugeführt. Zumindest ist die Eingangsschaltung 16 über eine Eingangsleitung 24 mit einem vom Fahrer betätigbarem Bedienelement 26 verbunden, beispielsweise der Bedieneinrichtung eines Tempomaten oder eines Fahrgeschwindigkeitsbegrenzers, anhand dessen der Fahrer Befehlssignale an die Steuereinrichtung 10 übermittelt, oder mit einer sonstigen Eingabeeinrichtung (z.B. einem externen Rechner, spezielle Bedienelemente für die nachfolgend beschriebene Vorgehensweise oder Bedienelemente/Tasten eines Navigationssystems). Ferner ist die Eingangsschaltung 16 über eine Eingangsleitung 28 mit einer Einrichtung 30 verbunden, welche Daten bezüglich der aktuellen Position des Fahrzeugs übermittelt. Diese Daten könnten GPS-Signale oder aufbereitete Ortskoordinaten sein. Darüber hinaus sind Eingangsleitungen 32 bis 36 vorgesehen, die der Steuereinrichtung 10 von Meßeinrichtungen 38 bis 42 fahrzeugspezifische Größen, beispielsweise die Radgeschwindigkeiten, Fahrzeuggeschwindigkeit, etc. zuführen.

Je nach Ausführungsbeispiel ist die Steuereinrichtung 10 ein Navigationssystem, eine zentrale Fahrzeugsteuereinrichtung, eine Steuereinrichtung für einen Fahrgeschwindigkeitsregler und/oder Fahrgeschwindigkeitsbegrenzer, eine Motorsteuereinrichtung, etc..

Im Nachfolgenden ist die Funktionsweise der erfindungsgemäßen Vorgehensweise anhand des bevorzugten Ausführungsbeispiels einer automatischen Fahrgeschwindigkeitsbegrenzung an vom Fahrer definierten Fahrstreckenabschnitten angegeben. Dabei ist vorgesehen, dass der Fahrer während dem Befahren eines Streckenabschnitts durch Betätigen eines Bedienelements, beispielsweise der Geschwindigkeitsfeststelltaste am Tempomatbedienhebel oder einer separaten Taste, den Programmiervorgang auslöst. Dabei wird die momentan gefahrene Geschwindigkeit als Grenzgeschwindigkeit vorgegeben, ferner die Ortskoordinate an dem Ort, an dem der Programmiervorgang ausgelöst wurde, eingespeichert. Am Ende der vom Fahrer vorgesehenen Fahrstrecke wird die Programmierung beendet, beispielsweise durch Betätigen dieselben oder eines anderen Bedienelements oder auch durch Treten des Gaspedals. Die bei Beendigung des Programmiervorgangs vorliegende aktuelle Ortskoordinate wird ebenfalls eingespeichert. Beim Wiederabfahren der Strecke wird also bei Erreichen der Ortskoordinate, die den Beginn der geschwindigkeitsbegrenzten Strecke anzeigt, eine automatische Geschwindigkeitsbegrenzung eingeleitet, während bei Erreichen der Ortskoordinate, die das Ende dieser Fahrstrecke anzeigt, die Geschwindigkeitsbegrenzung automatisch aufgehoben. Der Programmiermodus wird dem Fahrer z.B. durch eine Textinformation oder einer Warnlampe im Display oder durch Sprachausgabe ebenso wie das Befahren einer programmierten Fahrstrecke (hier zusammen mit der Grenzgeschwindigkeit) angezeigt.

Wird der Programmiervorgang bei einem erneuten Befahren einer bereits programmierten Wegstrecke erneut ausgelöst, so wird die vorherige Programmierung vollständig gelöscht, d.h. auch wenn Teile der früher programmierten Wegstrecke ausserhalb der neuprogrammierten Strecke liegen.

Während des Durchfahrens der vom Fahrer vorgegebenen Fahrstrecke wird die Geschwindigkeit des Fahrzeugs auf die einprogrammierte Grenzgeschwindigkeit begrenzt, das heißt das Fahrzeug fährt mit jeder vom Fahrer gewünschten beliebigen Geschwindigkeit unterhalb der Grenzgeschwindigkeit, während Geschwindigkeiten oberhalb der Grenzgeschwindigkeit nicht zugelassen werden. Auch während der Fahrt auf dieser Fahrstrecke ist ein Aufheben der automatischen Begrenzung möglich, beispielsweise indem der Fahrer das Gaspedal stark, insbesondere vollständig, durchtritt. So wird beispielsweise bei Schließen des sogenannten Kick-Down-Schalters die Geschwindigkeitsbegrenzung aufgehoben und dem Fahrer ermöglicht, das Fahrzeug auf Geschwindigkeiten zu beschleunigen, die größer als die vorgegebene, für diesen Streckenabschnitt einprogrammierte Grenzgeschwindigkeit sind.

Eine Ergänzung sieht vor, als Fahrzeugposition, an der die automatische Geschwindigkeitsbegrenzung einsetzt, eine Position abzuspeichern, die vor der Position liegt, an der der Fahrer mit der Programmierung begonnen hat. Dadurch wird die Reaktionszeit des Fahrers berücksichtigt. Somit wird bei Wiederbefahren einer Strecke mit einprogrammierter Geschwindigkeitsbegrenzung die Geschwindigkeitsbegrenzung rechtzeitig aktiviert. Die Ortskoordinate, die zum Auslösen der automatischen Geschwindigkeitsbegrenzung führt, wird aus der Ortskoordinate, bei der der Fahrer den Programmiervorgang beginnt, und einer Strecke berechnet, die aus Fahrzeuggeschwindigkeit und durchschnittlicher Reaktionszeit des Fahrers abgeleitet ist.

Im bevorzugten Ausführungsbeispiel werden die Ortskoordinaten direkt aus GPS-Signalen abgeleitet. In anderen Ausführungsbeispielen werden sie bereits aufbereitet aus anderen Systemen, beispielsweise einem Navigationssystem, geliefert.

Je nach Ausführungsbeispiel wird als Grenzgeschwindigkeit die zu Beginn des Programmiervorgangs vorliegende Geschwindigkeit oder, bei einer weiteren Verzögerung des Fahrzeugs unmittelbar nach dem Beginn der Programmierung, die Geschwindigkeit eingespeichert, bei der der Verzögerungsvorgang abgeschlossen ist.

Fährt das Fahrzeug mit einer Fahrzeuggeschwindigkeit größer als die Grenzgeschwindigkeit und fährt es in einen vom Fahrer vorgegebenen Fahrstreckenbereich ein, so wird die Geschwindigkeit des Fahrzeugs automatisch zeitlich abgeregelt, beispielsweise durch Reduzieren des Motormoments bis zum Erzeugen des maximalen Motorschleppmoments und/oder durch Eingriff in die Radbremsen. Im bevorzugten Ausführungsbeispiel wird ein Sollverzögerungswert vorgegeben, welcher in ein Motordrehmoment bzw. ein Bremsmoment umgesetzt wird zur Steuerung des Motors und/oder der Bremsanlage. dabei wird ein sanfter, komfortabler Übergang angestrebt, ohne allerdings zu lange im begrenzten Bereich mit zu hoher Geschwindigkeit zu fahren.

Die Programmierung der Fahrstrecke, auf der eine Geschwindigkeitsbegrenzung erfolgen soll, wird vom Fahrer wie oben dargestellt während Befahren der Strecke durch Betätigen wenigstens eines Bedienelements vorgenommen. Die Fahrstreckenkoordinaten werden dann direkt beispielsweise im Navigationssystem auf einem Speicher (z.B. ROM) gespeichert. Das Bedienelement zur Programmierung ist dabei je nach Ausführung vorhandene Tempomattasten bzw. Fahrgeschwindigkeitsbegrenzertasten, separate Bedienelemente oder Spracherkennung (Fahrerbefehle) oder wenigstens eine Bedientaste eines Navigationssystems. Mit Hilfe eines solchen Bedienelements wird auch ein wahlweises Ein- oder Ausschalten des Systems bereitgestellt, so dass der Fahrer die Möglichkeit hat, die fahrstreckenabhängige Beeinflussung des Fahrzeugs gänzlich auszuschalten.

In einer vorteilhaften Erweiterung wird die Programmierung durch den Fahrer nicht nur bei Befahren der jeweiligen Fahrstrecke vorgenommen, sondern auch durch Programmieren des Navigationssystems selbst, indem dort bei virtuellem Abfahren der Wegstrecke die Geschwindigkeitsbegrenzung (Anfang, Ende, Grenzwert, ggf. Richtung) einprogrammiert wird. In besonders vorteilhafter Ausführung könnte dies auch durch einen externen Rechner erfolgen, der über eine Datenverbindung mit dem Navigationssystem verbunden ist. Auf diese Weise könnte auch zur Fernwartung oder -diagnose eine Fahrstrecke vorgegebenen werden (vom Fahrer, Werkstattpersonal, etc. oder vom Rechner eines Servicezentrums), bei deren Befahren definierte Eingriffe in die Fahrzeugsteuerung erfolgen.

In vorteilhafter Weise werden ergänzend vorprogrammierte Datensätze über Fahrstrecken mit Geschwindigkeitsbegrezungen in das System eingespeichert, z.B. per Diskette oder CD.

Es wird ferner die Fahrtrichtung des Fahrzeugs erfaßt, beispielsweise durch Vergleich aufeinanderfolgender Ortskoordinaten und ihrer Differenz oder durch Radgeschwindigkeitssignale, aus denen die Drehrichtung ableitbar ist. Bei Programmiervorgang wird also in dieser Ausführung neben der Fahrstrecke, auf der einer Geschwindigkeitsbegrenzung gelten soll, und dem Grenzwert ferner die Fahrtrichtung des Fahrzeugs erfaßt. Auf diese Weise ist ausgeschlossen, dass das Fahrzeug an der gleichen Ortskoordinate auch in Gegenfahrtrichtung oder bei Querfahren (z.B. Kreuzung) abbremst. Es wird die Fahrtrichtung über die Differenz von zwei zeitlich kurz nacheinander abgefahrenen Ortskoordinaten bestimmt. Der einprogrammierte Fahrstrecke wird dann eine Kennung zugeordnet, welche die Fahrtrichtung repräsentiert. Eine Geschwindigkeitsbegrenzung wird nur dann vorgenommen, wenn die tatsächliche Fahrtrichtung des Fahrzeugs mit dieser Kennung übereinstimmt.

Ferner ist vorgesehen, dass beim Einprogrammiervorgang bei Befahren der entsprechenden Fahrstrecke die übliche Reaktionszeit des Fahrers berücksichtigt wird. Abhängig von der Fahrgeschwindigkeit des Fahrzeugs wird eine Reaktionsstrecke ermittelt, wobei die Ortskoordinate, ab welcher bei Wiederbefahren der Strecke die automatische Geschwindigkeitsbegrenzung einsetzt, aus der Ortskoordinate zum Zeitpunkt des Einprogrammierens und dieser Reaktionsstrecke ermittelt wird. Insbesondere wird als Ortskoordinate, bei welcher die Geschwindigkeitsbegrenzung einsetzt, eine um die Reaktionsstrecke in Fahrtrichtung vor der Ortskoordinate, bei der der Einprogrammiervorgang begonnen hat, liegende Ortskoordinate abgespeichert.

Im bevorzugten Ausführungsbeispiel wird der Programmier- und/oder der Begrenzungsvorgang in wenigstens einer Steuereinrichtung zur Fahrzeugsteuerung berechnet, vorzugsweise in der Steuereinrichtung eines Navigationssystems, einer zentralen Steuereinheit des Fahrzeugs oder einer anderen Steuereinheit des Fahrzeugs, wie etwa einer Motorsteuereinheit.

Die bevorzugte Realisierung der beschriebenen Vorgehensweise erfolgt im Rahmen von Softwareprogrammen. Anhand der Ablaufdiagramme der Figuren 2 und 3 ist eine solche Realisierungsmöglichkeit dargestellt. Dabei beschreibt Figur 2 die Vorgehensweise zur Programmierung in einem bevorzugten Ausführungsbeispiel, während in Figur 3 die Vorgehensweise der Begrenzung bei Wiederbefahren der programmierten Fahrstrecke dargestellt ist.

Wünscht der Fahrer die Programmierung der vorausliegenden Fahrstrecke zur Geschwindigkeitsbegrenzung, so startet er den Programmiervorgang durch Betätigen eines vorgesehenen Bedienelements oder durch einen vergleichbaren Steuerbefehl. Dies führt zum Start des Programmierprogramms (siehe Figur 2). Gemäß Schritt 100 wird die aktuelle Ortskoordinate, den der sich das Fahrzeug befindet, eingelesen und als Beginn der Fahrstrecke, für welche die Fahrzeugbeeinflussung vorgesehen ist, gespeichert. Im darauf folgenden Schritt 102 wird dann die aktuelle Fahrzeuggeschwindigkeit als Grenzgeschwindigkeit gespeichert. Dieser Speichervorgang wird in einem bevorzugten Ausführungsbeispiel bei Verzögerung des Fahrzeugs bei Beginn des Programmiervorgangs erst dann vorgenommen, wenn die Verzögerungsphase abgeschlossen ist. IN einer Ausführung wird die Geschwindigkeitsbegrenzung bereits während der Programmmierung der Fahrstrecke durchgeführt.

Im bevorzugten Ausführungsbeispiel erfolgt die Speicherung der Ortskoordinate durch Betätigen eines speziell vorgesehenen Bedienelements oder durch Betätigen eines vorhandenen, einer anderen Funktion zugeordneten Bedienelements auf eine bestimmte Art und Weise, beispielsweise ein Drücken des Bedienelements über einen längeren Zeitraum.

Im darauf folgenden Schritt 104 wird überprüft, ob der Programmiervorgang abgeschlossen ist. Ist dies nicht der Fall, so verbleibt das System im Programmiermodus. Hat der Fahrer durch entsprechende Betätigung des oder eines anderen Bedienelements (z.B. kick-down-Betätigung des Fahrpedals) angezeigt, dass die Fahrstrecke, auf der die Geschwindigkeitsbegrenzung automatisch vorgenommen werden soll, beendet ist, so wird im Schritt 106 die dann vorliegende Ortskoordinate eingelesen und gespeichert. Danach ist der Programmiermodus beendet. Die Fahrstrecke, auf der die Begrenzung der Geschwindigkeit stattfinden soll, ist also durch eine Ortskoordinate oder vergleichbarer Informationen bezüglich des Beginns und des Ende der Fahrstrecke bezeichnet. Wie vorstehend erwähnt, wird in einem bevorzugten Ausführungsbeispiel die Fahrtrichtung des Fahrzeugs berücksichtigt und als Kennung zusammen mit den Ortskoordinaten abgelegt. Eine Beendigung des Programmiervorgangs ohne Speichern einer Endekoordinate und unter Löschen der Anfangsortskoordinate erfolgt, wenn der Fahrer den Programmiervorgang abbricht (Tastenbetätigung) oder das Fahrzeug abgestellt.

Figur 3 zeigt die Vorgehensweise zur Begrenzung der Geschwindigkeit in Abhängigkeit der wie vorstehend dargestellten programmierten Fahrstrecke. Auch diese Funktion wird in einem der oben genannten Steuereinrichtungen durchgeführt.

Das Programm wird zu vorgegebenen Zeitpunkten durchlaufen. Zunächst wird im Schritt 200 die aktuelle Ortskoordinate des Fahrzeugs eingelesen. Ferner im bevorzugten Ausführungsbeispiel die Fahrtrichtung bestimmt. Daraufhin werden im Schritt 202 diese aktuellen Daten mit den gespeicherten Daten für eine geschwindigkeitsbegrenzende Fahrtstrecke verglichen. Entspricht die aktuelle Ortskoordinate und gegebenenfalls die Fahrtrichtung im Rahmen der vorgesehenen Toleranzen der Anfangsortskoordinate und gegebenenfalls der Fahrtrichtungskennung, so wird eine Fahrgeschwindigkeitsbegrenzung eingeleitet. Andernfalls wird das Programm beendet und zum nächsten Zeitpunkt durchlaufen. Wird im Schritt 202 also der Beginn einer Fahrtstrecke erkannt, auf der die Fahrzeuggeschwindigkeit zu begrenzen ist, so wird im Schritt 204 die Begrenzung der Fahrzeuggeschwindigkeit auf den eingespeicherten Grenzwert im Rahmen wenigstens einer bekannten Vorgehensweise vorgenommen. Im darauf folgenden Schritt 206 wird erneut die aktuelle Ortskoordinate eingelesen und mit der Endeortskoordinate verglichen. Ist die Endeortskoordinate noch nicht erreicht, wird die Begrenzung gemäß Schritt 204 weitergeführt. Ist im Rahmen der vorgesehenen Toleranzen die Ortskoordinate, die ein Ende der Fahrstrecke bezeichnet, im Rahmen der vorgegebenen Toleranz erreicht, wird gemäß Schritt 208 die Begrenzung aufgehoben und Fahrgeschwindigkeiten größer als die Grenzgeschwindigkeit zugelassen. Nach Schritt 208 wird das Programm beendet und zum nächsten Zeitpunkt erneut durchlaufen.

Ergänzend oder alternativ werden in einer Ausführung mögliche Verbindungsstrecken zwischen der Anfangs- und der Endekoordinate auf der Basis des Navigationssystems ermittelt. Weicht die tatsächlich befahrene Strecke von diesen oder dieser vorgegebenen Trajektorie (Streckenverlauf) ab, z.B. durch Abbiegen des Fahrzeugs, wird die Begrenzung bzw. der Fahrzeugeingriff beendet. In einer anderen Ausführung wird neben Anfang und Ende die beim Programmieren befahrene Trajektorie abgespeichert, und die Fahrzeugbeeinflussung beendet, wenn diese Trajektorie verlassen wird. Wenn das Fahrzeug in die vorgegebene (einprogrammierte) Trajektorie einbiegt, wird ab Befahren dieser Trajektorie die Geschwindigkeitsbegrenzung aktiviert.

## Patentansprüche

1. Verfahren zur fahrstreckenabhängigen Fahrzeugbeeinflussung, wobei eine Fahrstrecke individuell programmierbar ist, auf welcher eine vorgegebene Beeinflussung des Fahrzeugs stattfinden soll, wobei bei Wiederbefahren der programmierten Fahrstrecke die vorgegebene Fahrzeugbeeinflussung erfolgt, wobei es sich bei der Fahrzeugbeeinflussung um eine Fahrgeschwindigkeitsbegrenzung handelt und wobei bei der Programmierung der Fahrstrecke die Fahrtrichtung des Fahrzeugs erfasst wird und mit der programmierten Fahrstrecke abgespeichert wird, **dadurch gekennzeichnet, dass** der einprogrammierten Fahrstrecke eine Kennung zugeordnet wird, welche die Fahrtrichtung repräsentiert, und dass bei Wiederbefahren der programmierten Fahrstrecke die vorgegebene Fahrzeugbeeinflussung abhängig von der abgespeicherten Fahrtrichtung nur dann vorgenommen wird, wenn die tatsächliche Fahrtrichtung des Fahrzeugs mit der abgespeicherten Kennung übereinstimmt.

2. Verfahren nach Anspruch 1, **dadurch gekennzeichnet, dass** der Fahrer mittels eines Bedienelements eine Ortskoordinate für den Beginn der Fahrstrecke und eine Ortskoordinate für das Ende der Fahrstrecke vorgibt.

3. Verfahren nach Anspruch 2, **dadurch gekennzeichnet, dass** der Fahrer den Verlauf (Trajektorie) der Fahrstrecke vorgibt.

4. Verfahren nach einem der vorhergehenden Ansprüche, **dadurch gekennzeichnet, dass** die vorgegebene Fahrzeugbeeinflussung zuschzlich zu der Geschwindigkeitsbegrenzung, das Zu- oder Abschalten wenigstens einer Zusatzfunktion und/oder die Freigabe vorbestimmter Eingriffsmöglichkeiten von aussen umfasst.

5. Verfahren nach Anspruch 4, **dadurch gekennzeichnet, dass** zusammen mit den Ortskoordinaten und/oder dem Streckenverlauf eine Fahrzeuggrenzgeschwindigkeit abgespeichert wird.

6. Verfahren nach einem der vorhergehenden Ansprüche, **dadurch gekennzeichnet, dass** die Programmierung durch den Fahrer bei tatsächlichem Befahren der Fahrstrecke erfolgt oder per virtuellem Abfahren auf Bildschirmen eines Navigationssystems oder extern in Verbindung mit einem Navigationssystem vorgegeben wird.

7. Verfahren nach einem der vorhergehenden Ansprüche, **dadurch gekennzeichnet, dass** die automatische Fahrzeugbeeinflussung einschaltbar und abschaltbar ist.

8. Verfahren nach einem der vorhergehenden Ansprüche, **dadurch gekennzeichnet, dass** bei Programmieren der Fahrstrecke die Reaktionszeit des Fahrers berücksichtigt wird.

9. Verfahren nach einem der vorhergehenden Ansprüche, **dadurch gekennzeichnet, dass** ferner mittels eines Datenträgers vorprogrammierte Datensätze über Fahrstrecken, bei denen eine automatische Fahrzeugbeeinflussung erfolgt, vorgegeben wird.

10. Verfahren nach einem der vorhergehenden Ansprüche, **dadurch gekennzeichnet, dass** eine einprogrammierte Fahrstrecke durch virtuelles Abfahren der Strecke oder durch bei tatsächlichem Befahren der Strecke nachträglich löschbar ist.

11. Verfahren nach einem der vorhergehenden Ansprüche, **dadurch gekennzeichnet, dass** die Geschwindigkeitsbegrenzung während Befahren der Fahrstrecke aufgehoben wird, wenn der Fahrer das Fahrpedal betätigt (kick-down).

12. Vorrichtung zur fahrstreckenabhängigen Fahrzeugbeeinflussung, mit einer Steuereinrichtung (10), die wenigstens einen Mikrocomputer (18) umfasst, auf dem ein Programm zur individuellen Programmierung einer vorgegebenen Fahrstrecke abläuft, wobei ferner ein Programm vorgesehen ist, welches bei Wiederbefahren dieser Fahrstrecke eine automatische Fahrzeugbeeinflussung auflöst, wobei es sich bei der Fahrzeugbeeinflussing um eine Fahrgeschwindigkeitsbogrenzung handelt und wobei die Programme derart ausgestaltet sind, dass bei der Programmierung der Fahrstrecke die Fahrtrichtung des Fahrzeugs erfasst und abgespeichert wird, **dadurch gekennzeichnet, dass** der programmierten Fahrstrecke eine Kennung zugeordnet wird, welche die Fahrtrichtung des Fahrzeugs repräsentiert, und dass bei Wiederbefahren dieser Fahrstrecke eine automatische Fahrzeugbeeinflussung abhängig von der Fahrtrichtung des Fahrzeugs ausgelöst wird, nur dann, wenn die aktuelle Fahrtrichtung des Fahrzeugs mit der abgespeicherten Kennung übereinstimmt.

## Claims

1. Method for influencing a vehicle as a function of a route, in which a route on which the vehicle is to be influenced in a predefined way can be programmed individually, in which the vehicle is influenced in a predefined way when the programmed route is travelled along again, in which case the influencing of the vehicle takes the form of limiting its speed, and in which, when the route is programmed, the direction of travel of the vehicle is sensed and stored with the programmed route, **characterized in that** the programmed route is assigned an identifier which represents the direction of travel, and **in that**, when the programmed route is travelled along again, the vehicle is influenced in a predefined way as a function of the stored direction of travel only if the actual direction of travel of the vehicle corresponds to the stored identifier.

2. Method according to Claim 1, **characterized in that** the driver uses an operator control element to predefine a location coordinate for the start of the route and a location coordinate for the end of the route.

3. Method according to Claim 2, **characterized in that** the driver predefines the profile (trajectory) of the route.

4. Method according to one of the preceding claims, **characterized in that** the influencing of the vehicle in a predefined way comprises, in addition to the limitation of the speed, the activation or deactivation of at least one additional function and/or the enabling of predetermined intervention possibilities from the outside.

5. Method according to Claim 4, **characterized in that** a vehicle speed limit is stored together with the location coordinates and/or the route profile.

6. Method according to one of the preceding claims, **characterized in that** the programming is carried out by the driver when the route is actually travelled along or is predefined by travelling over the route in a virtual fashion on screens of a navigation system or is predefined externally in conjunction with a navigation system.

7. Method according to one of the preceding claims, **characterized in that** the automatic influencing of the vehicle can be switched on and switched off.

8. Method according to one of the preceding claims, **characterized in that** the reaction time of the driver is taken into account when the route is programmed.

9. Method according to one of the preceding claims, **characterized in that** in addition data records which have been preprogrammed by means of a data carrier and which relate to routes in which automatic influencing of the vehicle takes place are predefined.

10. Method according to one of the preceding claims, **characterized in that** a programmed route can be subsequently deleted by travelling over the route in a virtual fashion or by actually travelling over the route.

11. Method according to one of the preceding claims, **characterized in that** the limitation of the speed is cancelled when travelling along the route if the driver activates the accelerator pedal (kick-down).

12. Device for influencing a vehicle as a function of a route, having a control device (10) comprising at least one microcomputer (18) on which a program for individually programming a predefined route runs, in which in addition a program is provided which triggers automatic influencing of the vehicle when this route is travelled along again, in which case the influencing of the vehicle takes the form of limiting its speed, and in which the programs are designed in such a way that, when the route is programmed, the direction of travel of the vehicle is sensed and stored, **characterized in that** the programmed route is assigned an identifier which represents the direction of travel of the vehicle, and **in that**, when this route is travelled along again, automatic influencing of the vehicle is triggered as a function of the direction of travel of the vehicle only if the actual direction of travel of the vehicle corresponds to the stored identifier.

## Revendications

1. Procédé pour influencer un véhicule en fonction du trajet selon lequel
on peut programmer individuellement un trajet sur lequel on veut influencer le véhicule de manière prédéterminée,
et lorsque le trajet programmé est réemprunté, on influence le véhicule de manière prédéterminée,
l'influence sur le véhicule étant une limitation de vitesse,
lors de la programmation du trajet, on saisit la direction de déplacement du véhicule et on la mémorise avec le trajet programmé,
**caractérisé en ce que**
on associe une référence au trajet programmé, cette référence représentant la direction de déplacement, et
lorsqu'on emprunte de nouveau le trajet programmé, l'influence sur le véhicule ne se fera en fonction de la direction de déplacement mémorisée que si la direction de déplacement effective du véhicule correspond à la caractéristique mise en mémoire.

2. Procédé pour influencer un véhicule en fonction du trajet selon la revendication 1,
**caractérisé en ce qu'**
à l'aide d'un élément de manoeuvre, le conducteur prédéfinit une coordonnée de lieu pour le début du trajet et une coordonnée de lieu pour la fin du trajet.

3. Procédé pour influencer un véhicule en fonction du trajet selon la revendication 2,
**caractérisé en ce que**
le conducteur prédéfinit le trajet de déplacement.

4. Procédé pour influencer un véhicule en fonction du trajet selon l'une des revendications précédentes,
**caractérisé en ce que**
l'influence prédéfinie sur le véhicule comprend en plus de la limitation de vitesse, la mise en marche ou l'arrêt d'au moins une fonction auxiliaires et/ou la libération des possibilités d'intervention prédéfinies.

5. Procédé pour influencer un véhicule en fonction du trajet selon la revendication 4,
**caractérisé en ce qu'**
on mémorise une vitesse limite du véhicule en même temps que les coordonnées de lieu et/ou le trajet.

6. Procédé pour influencer un véhicule en fonction du trajet selon l'une quelconque des revendications précédentes,
**caractérisé en ce que**
la programmation par le conducteur se fait lors du parcours effectif du trajet ou selon un parcours virtuel sur l'écran d'un système de navigation ou, de manière externe, en liaison avec un système de navigation.

7. Procédé pour influencer un véhicule en fonction du trajet selon l'une des revendications précédentes,
**caractérisé en ce que**
l'influence automatique sur le véhicule peut être mise en oeuvre ou neutralisée.

8. Procédé pour influencer un véhicule en fonction du trajet selon l'une des revendications précédentes,
**caractérisé en ce qu'**
en programmant le trajet, on tient compte du temps de réaction du conducteur.

9. Procédé pour influencer un véhicule en fonction du trajet selon l'une des revendications précédentes,
**caractérisé en ce qu'**
en outre, à l'aide d'un support de données, on prédéfinit des jeux de données préprogrammés concernant le trajet et pour lesquels il y aura une influence automatique sur le véhicule.

10. Procédé pour influencer un véhicule en fonction du trajet selon l'une des revendications précédentes,
**caractérisé en ce qu'**
un trajet programmé peut être effacé ultérieurement par le parcours virtuel du trajet ou par le parcours effectif de ce trajet.

11. Procédé pour influencer un véhicule en fonction du trajet selon l'une des revendications précédentes,
**caractérisé en ce que**
l'on neutralise la limitation de vitesse lors du parcours du trajet si le conducteur actionne la pédale d'accélérateur (kick-down).

12. Dispositif pour influencer un véhicule en fonction du trajet comprenant une installation de commande (10) ayant au moins un micro-ordinateur (18) sur lequel s'exécute un programme de programmation individuelle d'un trajet de déplacement prédéfini et selon lequel il est prévu un programme qui, lorsque ce trajet est de nouveau emprunté, déclenche une influence automatique sur le véhicule, cette influence sur le véhicule étant une limitation de vitesse,
les programmes étant conçus pour que, lors de la programmation du trajet, on saisisse la direction de déplacement du véhicule et on l'enregistre,
**caractérisé en ce que**
le trajet programmé est combiné à une référence qui représente la direction de déplacement du véhicule et lorsqu'on emprunte de nouveau ce trajet, l'influence automatique sur le véhicule est déclenchée selon la direction de déplacement du véhicule seulement si la direction actuelle de déplacement du véhicule correspond à la caractéristique en mémoire.
